# EUROPEAN PATENT APPLICATION

(11) **EP 4 755 182 A1**
(43) Date of publication of application: **10.06.2026**
(21) Application number: 25220651.1
(22) Date of filing: 04.12.2025
(51) Int. Cl.: A01K 89/0155, A01K 89/033

(54) **COMBINED MAGNETIC AND FRICTION CASTING BRAKE AND FISHING REEL INCLUDING THE SAME**

(30) Priority: 05.12.2024 US 202418970262
(71) Applicant: Pure Fishing, Inc., Spirit Lake, IA 51360 (US)
(72) Inventor: SVENSSON, Patrik, 37451 ASARUM (SE)
(74) Representative: Cabinet Beau de Loménie

(57) **Abstract**

A casting brake for slowing rotation of a spool (110) of a fishing reel includes a brake guide (138) and a brake disk (146) positioned in the brake guide and moveable relative to the brake guide between a first position and a second position. The brake disk includes one or more magnets that apply a magnetic brake force on the spool, and one or more brake pads that apply a friction brake force on the spool when the brake disk is in the second position.

## Description

### BACKGROUND

Braking systems are commonly installed on baitcasting reels to regulate the spool's rotation during a cast. Functionally, the brakes operate in a manner similar to how car brakes slow the rotation of a car's tires. As brakes are applied to the reel during casting, more resistance is provided on the spool. The purpose of the braking system on a baitcasting reel is to avoid backlash. Backlash occurs when the spool spins and feeds out line faster than the speed at which the lure is traveling. This leads to slack in the line between the spool and the lure, which can cause the line to tangle. Such backlashing leads to a mess that usually takes a lot of time to untangle. Preferably the speed at which the spool feeds the line is controlled such that the lure maintains a tensile or pulling force on the line to avoid slack and backlash.

Existing braking systems use magnets that affect the rotation of the spool, and springs to pull the magnets away from the spool in the axial direction. As a result, their ability to be adjusted is very limited.

Another braking system includes a ring that is mounted on the spool that can move back and forth between two magnetic rings. That system, however, makes the spool heavy and is counterproductive for casting distance since any added weight to the spool decreases casting distance.

### SUMMARY

The purpose of the casting brake hereof is to combine magnetic brake and friction brake forces for well-controlled braking on a spool during casting, and to reduce the brake force during reeling or retrieval of the fishing line. This may be achieved by providing a brake disk that is moveable relative to the spool and includes magnets for applying the magnetic brake force on the spool and brake pads for applying the friction brake force on the spool. The brake disk is rotatable with the spool via the magnets and rotation of the brake disk can be translated to axial movement of the brake disk relative to the spool between a first position, in which the friction brake force is not applied to the spool, and a second position, in which the friction brake force is applied. The brake disk can be housed within a brake guide that interacts with the brake disk to axially move the brake disk during rotation relative to the spool. When the fishing line is cast, the brake disk rotates and moves towards the second position, where the magnetic brake and friction brake forces are applied. When the cast is finished, and an angler begins to reel and retrieve the bait, the brake disk rotates and moves towards the first position, where the friction brake force is released and the magnetic brake force is reduced so that retrieval will be lighter, and the feel of the lure will be increased.

### BRIEF DESCRIPTION OF THE DRAWINGS

For a better understanding of the various aspects of the present disclosure, reference may be made to the accompanying drawings in which:
Fig. 1 is a perspective view of a fishing reel incorporating a combined magnetic and friction brake assembly in accordance with the present disclosure;
Fig. 2 is a rear elevation view of the fishing reel of Fig. 1;
Fig. 3 is a section of the portion of the fishing reel indicated by the dashed-line box 3 in Fig. 2, with the direction of view being into the page;
Fig. 4 is an exploded view of a portion of the fishing reel of Figs. 1-3, with various components omitted for conciseness and ease of illustration;
Fig. 5 is an isolated perspective view of a combined magnetic and friction brake assembly of the fishing reel;
Fig. 6 is an exploded view of the brake assembly of Fig. 5;
Figs. 7 and 8 are section views that depict movement of a brake disk of the brake assembly between a first position (shown in Fig. 7) and a second position (shown in Fig. 8); and
Fig. 9 is a magnified section view of a brake pad of the brake disk engaged with a brake plate of a spool.

While the disclosure is susceptible to various modifications and alternative forms, specific embodiments thereof are shown by way of example in the drawing and will herein be described in detail. It should be understood, however, that the drawings and detailed description presented herein are not intended to limit the disclosure to the particular embodiment disclosed, but on the contrary, the intention is to cover all modifications, equivalents, and alternatives falling within the spirit and scope of the present disclosure.

### DETAILED DESCRIPTION

Aspects of the present disclosure will now be described with reference to the drawing figures, in which like reference numerals refer to like parts throughout. For purposes of clarity in illustrating the characteristics of the present disclosure, proportional relationships of the elements have not necessarily been maintained in the drawing figures. It will be understood that any dimensions included in the figures are simply provided as examples and dimensions other than those provided therein are also within the scope of this disclosure.

This description references specific embodiments in which the aspects of the present disclosure can be practiced. The embodiments are intended to describe the aspects in sufficient detail to enable those skilled in the art to practice the same. Other embodiments can be utilized and changes can be made without departing from the scope of the present disclosure. The description is, therefore, not to be taken in a limiting sense and shall not limit the scope of equivalents to which the appended claims are entitled.

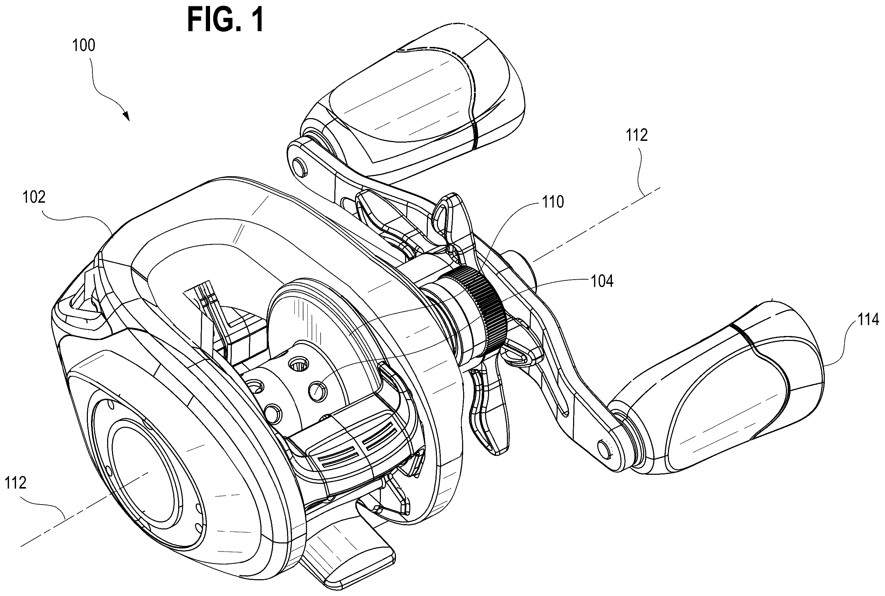

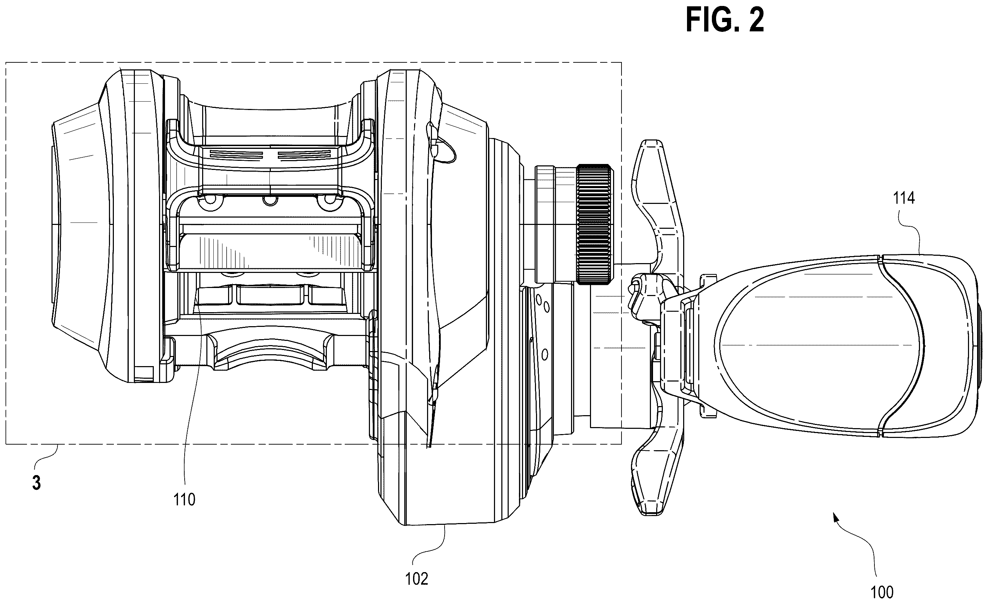

Referring to Figs. 1 and 2, a fishing reel incorporating a combined magnetic and friction brake assembly in accordance with the present disclosure is indicated generally at 100. The fishing reel 100 may include a housing 102, a shaft 104, and a spool 110. The shaft 104 is preferably supported in the housing 102 and is rotatable relative to the housing 102 around a shaft axis 112 extended in a longitudinal direction of the shaft 104, along a width direction of the fishing reel 100. The longitudinal direction may also be referred to as an axial direction. More broadly, directional terms such as "axial," "radial," "circumferential," and the like, as used herein, may be relative to the shaft axis 112.

The spool 110 may be coupled to the shaft 104 such that the spool 110 rotates with the shaft 104 around the shaft axis 112 for winding and unwinding a fishing line (not shown) with respect to the fishing reel 100. The fishing reel 100 may also include a handle 114 for manually turning the shaft 104 and the spool 110 for winding and unwinding the fishing line with respect to the fishing reel 100.

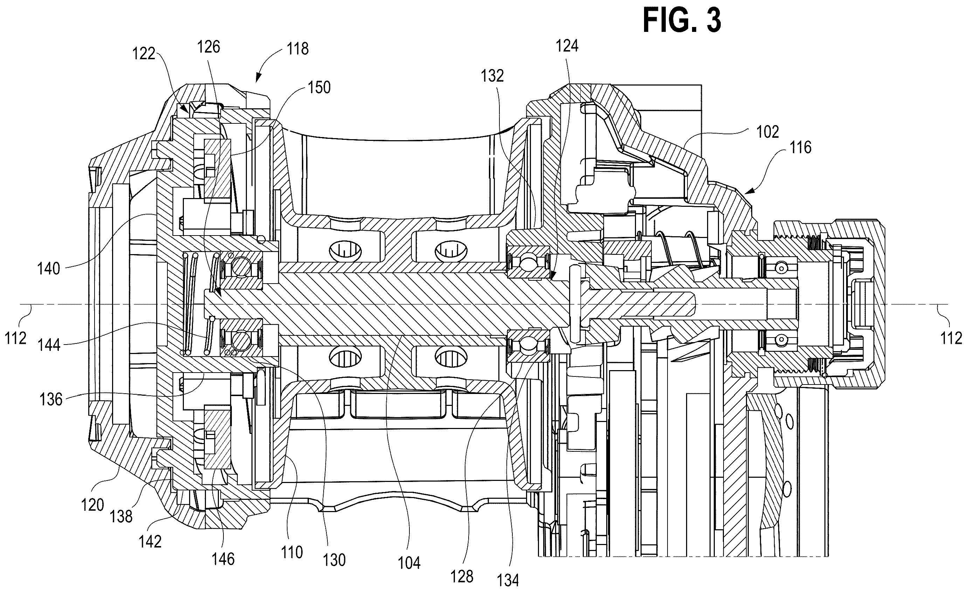

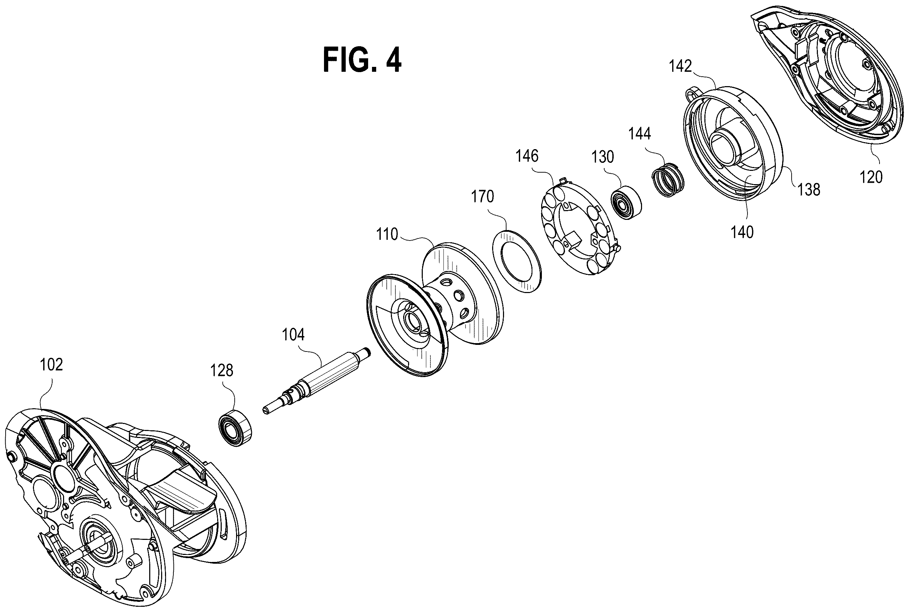

Turning to Figs. 3 and 4, the housing 102 includes a proximal end 116 proximate the handle 114 (shown in Figs. 1 and 2) and a distal end 118 opposite the proximal end. An end plate 120 may be connected to the distal end 118 of the housing 102 and may support a brake assembly 122 relative to the housing 102.

The shaft 104 extends between two shaft ends 124, 126 proximate the proximal end 116 and the distal end 118, respectively, of the housing 102. The shaft 104 may be rotatably supported at a first shaft end 124 by a first bearing assembly 128 and/or at a second shaft end 126 by a second bearing assembly 130. In the illustrated example, the bearing assemblies 128, 130 each include ball bearings. Alternatively, any suitable bearing (e.g., a journal bearing or a bushing) can be used for rotatably supporting the shaft 104.

The first bearing assembly 128 may be housed within a first annular bearing housing 132 that protrudes axially outwardly from the housing 102. The first bearing housing 132 may surround an axial stop 134 of the housing 102. The axial stop 134 in this example is defined by an axial surface of the housing 102 from which the first bearing housing 132 protrudes outwardly. The axial stop 134 may serve as a datum for axial positioning of the shaft 104, the spool 110, and the first bearing assembly 128. As shown in Fig. 3, the first bearing assembly 128 may abut the axial stop 134 in the axial direction, and the shaft 104 and the spool 110 may each abut the first bearing assembly 128 in the axial direction. As such, the axial stop 134 may operate to limit or prevent axial movement of the shaft 104, the spool 110, and the first bearing assembly 110 towards the proximal end 116 of the housing 102 during rotation of the shaft and the spool.

The second bearing assembly 130 may be housed within a second annular bearing housing 136 defined by a brake guide 138 of the brake assembly 122. The brake guide 138 in this example may include a generally disk-shaped body having a rear axial plate 140 and an outer shroud 142 protruding axially inwardly from the rear axial plate 140. The shroud 142 may define an interior of the brake guide 138 that is closed at one end of the shroud 142 by the rear plate 140 and open at the other end of the shroud 142. The second bearing housing 136 may protrude axially inwardly from the rear plate 140 within the interior of the brake guide 138, defining a compartment that receives the second bearing assembly 130.

The second bearing assembly 130 may abut the shaft 104 within the second bearing housing 136 to axially locate and position the shaft 104 relative to the second bearing assembly 130. The second bearing assembly 130 may additionally or alternatively be able to move axially within the second bearing housing 136 to compensate for and/or absorb axial loads during rotation of the shaft 104. Controlled axial movement of the second bearing assembly 130 may be enabled by an elastic member. The elastic member may be positioned in the second bearing housing 136 between the second bearing assembly 130 and the rear plate 140. In this example, the elastic member may be a spring 144. In an uncompressed state, the spring 144 may bias the second bearing assembly 130 and the shaft 104 in the axial direction towards the proximal end 116 of the housing 102, thereby urging the first bearing assembly 128 against the axial stop 134 and the shaft 104 and the spool 110 against the first bearing assembly 128. The spring 144 may also compress in response to axial loads on the shaft 104 and the bearing assemblies 128, 130 during rotation of the shaft and the spool to allow axial movement of the second bearing assembly 130 towards the distal end 118 of the housing 102. Thereby, the spring 144 may be able to absorb the axial loads. In other examples, any suitable elastic or compressible component can be used to absorb axial loads between the second bearing assembly 130 and the rear plate 140. In some examples, the elastic component may be omitted.

The brake guide 138 may be secured or fixed to the distal end 118 of the housing 102 via the end plate 120 using any suitable means (e.g., fasteners, welds, adhesives, etc.). The brake guide 138 may be rotatably and axially fixed relative to the housing 102, and the working brake components of the brake assembly 122 may be movable relative to the brake guide 138. The brake guide 138 may guide or direct movement of the brake components for selectively applying a braking force on the spool 110, as described below.

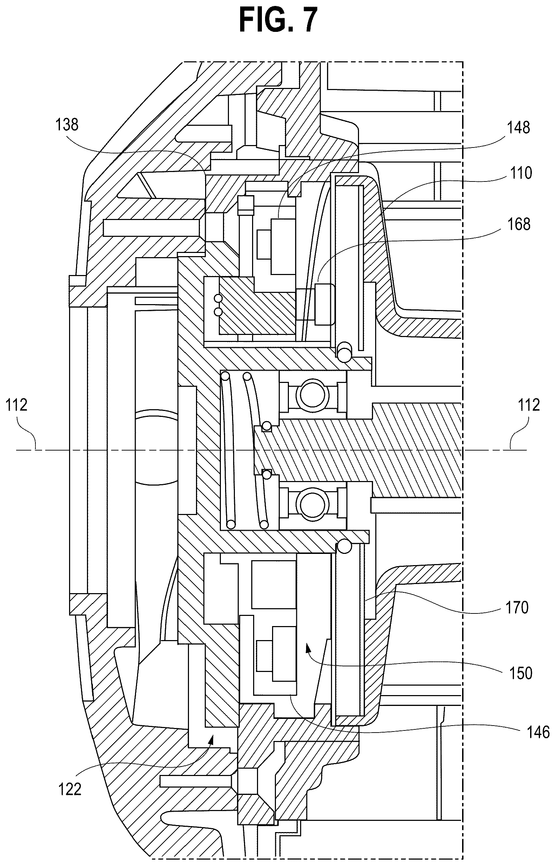

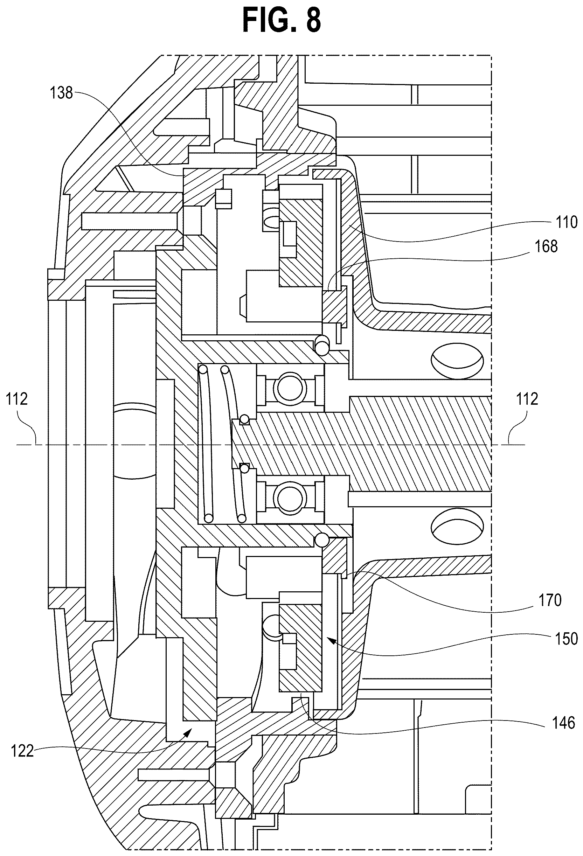

The brake assembly 122 may also include a brake disk 146 that is housed within the interior of the brake guide 138 and movable relative to the brake guide 138 between a first position (shown in Fig. 7) and a second position (shown in Fig. 8). The brake disk 146 may surround the second bearing housing 136 when housed in the brake guide 138. The brake disk 146 in this example may be magnetic and operates as a magnetic casting brake for the spool 110. When the magnetic brake disk 146 is nearer the spool 110 (e.g., when the brake disk 146 is in the second position), the spool 110 and any line associated therewith may be slowed down. More particularly, the magnetic brake disk 146 preferably creates a magnetic field which, when in the vicinity of the rotating spool 110, slows down the rotational speed of the spool 110. The spool 110 may be made from any of a number of suitable conductive materials including, but not limited to, aluminum, such that rotation of the spool 110 in the vicinity of the magnetic field created by the brake disk 146 may induce a complementary or opposing magnetic field in the spool 110 and, in turn, a drag or brake force acts on the spool 110. As the brake disk 146 moves farther away from the spool 110 (e.g., when the brake disk 146 moves towards the first position), the electromagnetic interaction between the brake disk 146 and the spool 110 may be reduced, thereby reducing the brake force on the spool 110.

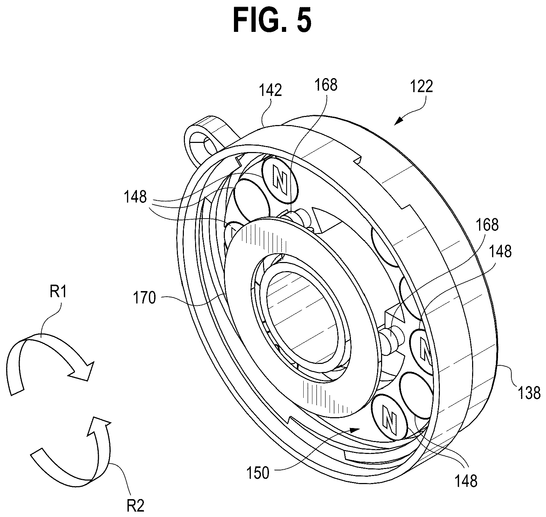

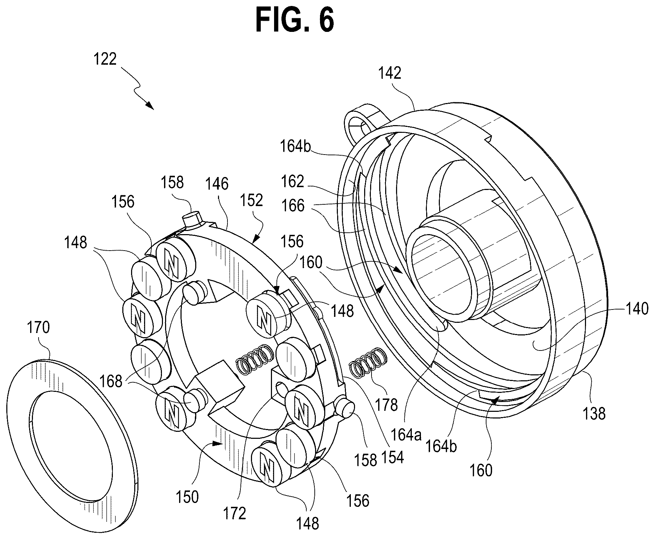

Referring now to Figs. 5 and 6, the brake disk 146 may include one or more magnets 148 fixably attached to the brake disk 146. The magnets 148 may create the magnetic field of the brake disk 146. The magnets 148 may be arranged circumferentially with alternating poles at a first axial face 150 of the brake disk 146 that faces the spool 110 (shown in Fig. 3). Any number of magnets 148 may be included for the brake disk 148. For example, in the illustrated embodiment, the brake disk 148 includes ten magnets 148.

The magnets 148 may be arranged circumferentially at the first axial face 150. In some examples, the magnets 148 may be circumferentially arranged in discrete arcuate sets. For example, in the illustrated embodiment, the magnets 148 may be arranged in two arcuate sets. In this example, each arcuate set may include five of the magnets 148, with three having a north pole at the first axial face 150 and two having a south pole at the first axial face. The magnets 148 having the north pole at the first axial face may be depicted in the drawings with an "N" viewable at the first axial face 150 of the brake disk 146, and the magnets 148 having the south pole at the first axial face 150 may be depicted in the drawings as blank when viewed at the first axial face 150.

Each of the five magnets 148 of each arcuate set can be magnetically coupled at a second axial face 152 of the brake disk 146, via an arcuate magnet plate 154 made of a suitable material (e.g., ferritic or magnetic stainless steel). In the illustrated example, two magnet plates 154 may be included, which each can magnetically couple one of the arcuate sets of the magnets 148. In some examples, all the magnets 148, or subsets of the magnets 148 of any number can be magnetically coupled using a magnet plate 154.

Each magnet 148 may have a round puck shape and can be seated within a corresponding circular slot 156 defined in the first axial face 150. The first axial face 150 faces the spool 110 when the brake assembly 122 is installed in the reel 100 as shown, e.g., in Fig. 3. The number of slots 156 included in the brake disk 146 may correspond to the number of magnets 148, and the number of slots 156 can vary depending on the number of magnets 148. In the illustrated embodiment, for example, there may be ten slots 156 corresponding to ten magnets 148.

The magnets 148 can be fixed or secured within the corresponding slots 156 using any suitable coupling means (e.g., adhesive, press-fit, fasteners, or another suitable means). Additionally, or alternatively, the magnets 148 may be fixed or secured relative to the brake disk 146 within the corresponding slots 156 via the magnet plate(s) 154. The magnets 148 can be flush with the first axial face 150, or may depend inwardly from the first axial face 150, or may protrude outwardly from the first axial face 150. In some examples, the magnets 148 may be fixed or secured to the first axial face 150 using a suitable coupling means and the slots are not included in the brake disk 146.

The arrangement, number, and configuration (e.g., shape) of the magnets 148 in the example brake assembly 122 is provided by way of example. Any arrangement, number, and configuration of magnets can be included in the brake disk 146 to provide suitable magnetic properties to the brake disk that enable the brake disk to function as described. For example, more or fewer than ten magnets 148 may be included.

The electromagnetic interaction between the magnetic brake disk 146 and the conductive spool 110 may also cause the brake disk 146 to rotate with the spool 110. The brake guide 138 may translate rotational movement of the brake disk 146 into axial movement of the brake disk 146. Axial movement of the brake disk 146 is depicted in the sequence between Figs. 7 and 8, which show the brake disk 146 in the first position and the second position, respectively.

Preferably, the brake guide 138 may guide or direct the brake disk 146 to move between the first position towards the second position when the brake disk 146 rotates in a first rotation direction R₁ (clockwise direction in Fig. 5), and between the second position towards the first position when the brake disk 146 rotates in a second rotation direction R₂ (counter-clockwise direction in Fig. 5). Rotation of the brake disk 146 in the first rotation direction R₁ may correspond to rotation of the spool 110 during casting, such that the brake guide 138 may direct the brake disk 146 towards the spool 110 to increase the brake force thereon during casting and prevent potential backlash. Rotation of the brake disk 146 in the second rotation direction R₂ may correspond to rotation of the spool 110 during reeling or retrieval of the fishing line, such that the brake guide 138 may direct the brake disk 146 away from the spool 110 to reduce the brake force thereon during reeling. In this way, retrieval of the fishing line may be lighter, and the feel of the lure may be increased.

In the example brake assembly 122, rotation of the brake disk 146 may be translated to axial movement via interaction between radially outward extending pins 158 of the brake disk 146 and cam slots 160 defined in an inner surface 162 of the shroud 142 of the brake guide 138. In the illustrated example, there may be three pins 158 and three corresponding cam slots 160. More or fewer pins 158 and cam slots 160 can be included in other examples.

Each cam slot 160 may extend circumferentially along the inner shroud surface 162 between a first end 164a and a second end 164b. Each cam slot 160 may define a wall 166 against which the corresponding pin 158 slides. The walls 166 may be proximate the rear plate 140 of the brake guide 138 at the first end 164a of the corresponding cam slot 160 and may gradually move farther away from the rear plate 140 as the cam slot 160 extends circumferentially to the second end 164b, towards an axial end of the shroud 142 opposite the rear plate 140. As a result, a width of each cam slot 160 may gradually decrease, such that the cam slot width may be greatest at the first end 164a and smallest at the second end 164b.

The pins 158 may be located at the first ends 164a of the corresponding cam slots 160 when the brake disk 146 is in the first position. From this first position, when the brake disk 146 rotates in the first rotation direction R₁, the pins 158 may slide against the walls 166 of the cam slots 160 which gradually move the pins 158, and thereby the brake disk 146, away from the rear plate 140 and thus towards the spool 110. Axial movement of the brake disk 146 during rotation in the first rotation direction R₁ may terminate when the pins 158 reach the second ends 164b of the cam slots 160, at which point the brake disk 146 is in the second position and abuts the spool 110 to apply a friction brake force as described below. From this second position, when the brake disk 146 rotates in the second rotation direction R₂, the pins 158 may slide against the walls 166 of the cam slots 160 which gradually move the pins 158, and thereby the brake disk 146, closer towards the rear plate 140 and thus away from the spool 110. Axial movement of the brake disk 146 during rotation in the second rotation direction R₂ may terminate when the pins 158 reach the first ends 164a of the cam slots 160, at which point a step between the cam slot 160 and the inner shroud surface 162 may act as a stop to prevent further circumferential movement of the pins 158 and rotation of the brake disk 146.

A degree of rotation that the brake disk 146 makes when moving axially between the first position and the second position can vary and may depend, in this example, on the circumferential length (or arc measure) of the cam slots 160. For example, the brake disk 146 may rotate between 30° and 360° when moving axially between the first position and the second position. In some examples, the brake disk may rotate between 30° to 180°, such as between 30° to 90°, or between 30° to 60° when moving axially between the first position and the second position. Alternatively, in some examples, the brake disk 146 may rotate greater than 360°, where the cam slots 160 may extend circumferentially at least one full 360° turn about the inner shroud surface 162.

In accordance with the present disclosure, when the brake disk 146 is in the second position, the brake disk may apply a friction force against the spool 110 in addition to the magnetic brake force described above. One problem with solely relying on electromagnetic interaction between the brake disk 146 and the spool 110 for applying the brake force, is that the magnetic brake force is dependent on the rotational speed of the spool. As rotation of the spool 110 slows down, there may be less electromagnetic interaction and the magnetic brake force reduces. During casting, rotation of the spool 110 may be fastest immediately after the cast and may gradually slow as the line is released. As the lure approaches and eventually reaches the water, the magnetic brake force may continue to drop which may lead to backlash and/or additional fishing line being released even after the lure hits the water. The application of the friction force in addition to the magnet force may enable the brake disk 146 to provide well-controlled braking of the spool and to stop the release of the line at the appropriate time (e.g., when the lure hits the water).

The brake disk 146 in this example may include brake pads 168 that protrude outward from the first axial face 150. Three brake pads 168 may be included in the illustrated example, but more or fewer brake pads can be included in other examples. The brake pads 168 may be arranged circumferentially about the first axial face 150, and can be spaced at equal intervals (e.g., spaced 120° apart) or any other suitable interval. When the brake disk 146 is in the second position, the brake pads 168 may abut against a brake plate 170 fixed to an axial end of the spool 110 that faces the first axial face 150. Fig. 8 depicts engagement between the brake pads 168 and the brake plate 170 when the brake disk is in the second position. The brake plate 170 can be fixed or secured to the spool 110 using any suitable means (e.g., adhesive, welds, fasteners, etc.).

The brake plate 170 may be ring shaped to enable the brake pads 168 to apply a constant frictional force thereon as the brake disk 146 continues to rotate. This frictional force may operate to slow rotation of the spool 110 in addition to the magnetic brake force described above. The brake plate 170 may be made from a number of suitable materials, such as stainless steel or chrome-plated brass, which may resist frictional wear from the brake pads 168.

The brake pads 168 abutting against the brake plate 170 may also terminate axial movement of the brake disk 146 at the second position and/or may prevent the pins 158 from exiting the cam slots 160. Because further axial movement of the brake disk 146 towards the spool 110 may be restricted when the brake disk reaches the second position, the walls 166 at the second ends 164b of the cam slots 160 may stop circumferential movement of the pins 158 and, thereby, rotation of the brake disk 146. Accordingly, since rotation of the brake disk 146 may be stopped in the second position, the brake pads 168 may be static relative to the rotating spool 110, and the static brake pads 168 may allow the frictional force to eventually stop rotation of the spool.

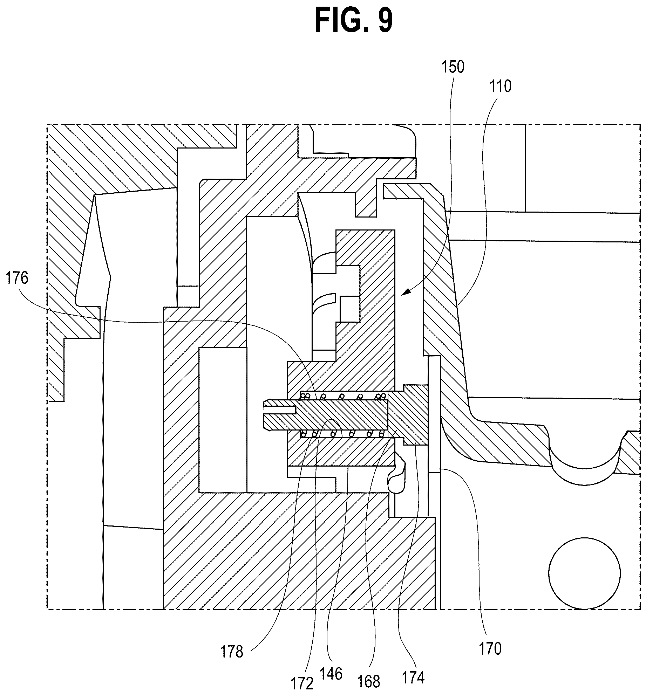

Referring to Fig. 9, each brake pad 168 may be received in a corresponding bore 172 defined in the first axial face 150. There may be three bores 172 each receiving one of the three brake pads 168 in this example, and the number of bores 172 may vary depending on the number of brake pads 168. The bores 172 may extend through the brake disk 146 between the axials faces 150, 152 in this example, but in other examples the bores 172 may be blind holes defined in the first axial face 150.

Each brake pad 168 may include a head 174 that protrudes outwardly from the corresponding bore 172 and the first axial face 150 of the brake disk 146. The heads 174 of the brake pads 168 may be the part that abuts the brake plate 170 to apply the friction force for slowing rotation of the spool 110. The heads 174 may include any suitable material to perform this function, such as rubber, Kevlar, ceramic, and the like. Each head 174 may be joined (e.g., attached or made integral with) to a stem 176. Each stem 176 may extend into and/or may be received by the corresponding bore 172.

In the illustrated example, each brake pad 168 may be axially moveable relative to the brake disk 146 to enable the brake pads to compress when initially brought into contact with the brake plate 170. In the illustrated example, controlled axial movement of each brake pad 168 may be enabled by an elastic member. In this example, the elastic member may be a spring 178 that surrounds the stem 176. Each spring 178 may be positioned in the corresponding bore 172 between the head 174 of the brake pad 168 and a stop collar 180 at the end of the bore 172 proximate the second axial face 152 of the brake disk 146. In an uncompressed state (e.g., when the brake disk 146 is in the first position), the springs 178 may each bias the heads 174 of the corresponding brake pads 168 in the axial direction away from the first axial face 150 of the brake disk 146, thereby urging the heads 174 to protrude outwardly from the first axial face 150. When the brake disk 146 moves to the second position and the brake pads 168 come into contact with the brake plate 170, the springs 178 may each compress to allow axial movement of the heads 174 of the brake pads 168 towards the first axial face 150 of the brake disk 146. Thereby, the springs 178 may provide a controlled application of the friction force on the spool 110 when the brake pads 168 are brought into contact with the brake plate 170.

In the disclosure hereof, the brake disk 146 of the brake assembly 122 may be moveable towards the spool 110 and may apply a combined magnetic and friction brake force on the spool 110 during casting of a fishing line. This may provide a well-controlled and more reliable brake operation performed to slow down the spool, improving the ability to stop release of the line when desired and prevent backlash. The brake disk 146 may also move away from the spool 110 during reeling or retrieval of the fishing line, such that the retrieve process may be lighter and the feel of the lure may be increased.

From the foregoing, it will be seen that the various embodiments of the present disclosure are well adapted to attain all the objectives and advantages hereinabove set forth together with still other advantages which are obvious and which are inherent to the present structures. It will be understood that certain features and sub-combinations of the present embodiments are of utility and may be employed without reference to other features and sub-combinations. Since many possible embodiments of the present disclosure may be made without departing from the spirit and scope of the present disclosure, it is also to be understood that all disclosures herein set forth or illustrated in the accompanying drawings are to be interpreted as illustrative only and not limiting. The various constructions described above and illustrated in the drawings are presented by way of example only and are not intended to limit the concepts, principles and scope of the present disclosure.

Many changes, modifications, variations and other uses and applications of the present disclosure will, however, become apparent to those skilled in the art after considering the specification and the accompanying drawings. All such changes, modifications, variations and other uses and applications which do not depart from the spirit and scope of the disclosure are deemed to be covered by the invention which is limited only by the claims which follow.

## Claims

1. A casting brake for slowing rotation of a spool (110) of a fishing reel (100), the casting brake comprising:
a brake guide (138); and
a brake disk (146) positioned in the brake guide and moveable relative thereto between a first position and a second position, the brake disk including:
one or more magnets (148) that apply a magnetic brake force on the spool; and
one or more brake pads (168) that apply a friction brake force on the spool when the brake disk is in the second position.

2. The casting brake of claim 1, wherein the brake disk (146) is rotatable with the spool via the one or more magnets (148), and wherein the brake disk interacts with the brake guide (138) to translate rotation of the brake disk into movement of the brake disk between the first position and the second position.

3. The casting brake of claim 2, wherein the brake disk (146) includes one or more pins (158) that slide circumferentially within one or more cam slots (160) of the brake guide during rotation of the brake disk, wherein the cam slots are configured such that interaction between the cam slots and the pins sliding circumferentially therein moves the brake disk between the first position and the second position.

4. The casting brake of any of claims 1 to 3, wherein each of the one or more brake pads (168) is axially moveable relative to the brake disk (146) when the one or more brake pads contact the spool (110).

5. The casting brake of claim 4, wherein each of the one or more brake pads (168) includes a head (174) that abuts the spool (110) when the brake disk is in the second position, and a stem (176) extending from the head and being received by a corresponding bore (172) in the brake disk, and wherein an elastic member (178) is positioned in each bore and is compressed when the head of the corresponding brake pad abuts the spool.

6. The casting brake of claim 5, wherein the elastic member (178) is a spring that surrounds the stem (176).

7. The casting brake of any of claims 1 to 6, wherein the brake guide (138) includes a bearing housing (136) for housing a bearing assembly (130) of the fishing reel (100).

8. The casting brake of claim 7, wherein the brake disk (146) surrounds the bearing housing (136).

9. The casting brake of any of claims 1 to 8, wherein the one or more magnets (148) include multiple magnets arranged circumferentially about the brake disk (146) with alternating poles facing the spool.

10. The casting brake of claim 9, wherein the magnets (148) are magnetically coupled via one or more magnet plates (154).

11. A fishing reel (100) comprising:
a housing (102);
a shaft (104) supported in the housing and rotatable relative to the housing about a shaft axis;
a spool (110) coupled to the shaft and rotatable with the shaft around the shaft axis; and
a brake assembly (122) operable to slow rotation of a spool, the brake assembly including a brake disk (146) moveable relative to the spool between a first position and a second position, the brake disk including:
one or more magnets (148) that apply a magnetic brake force on the spool; and
one or more brake pads (168) that apply a friction brake force on the spool when the brake disk is in the second position.

12. The fishing reel of claim 11, wherein:
the brake assembly (12) includes a brake guide (138) housing the brake disk (146),
the brake disk is rotatable with the spool via the one or more magnets, and
the brake disk interacts with the brake guide to translate rotation of the brake disk into movement of the brake disk between the first position and the second position.

13. The fishing reel of claim 12, including a first bearing assembly (128) rotatably supporting the shaft (104) at a first shaft end, wherein the brake guide (138) includes a first bearing housing (132) that houses the first bearing assembly.

14. The fishing reel of claim 13, including a second bearing assembly (130) rotatably supporting the shaft (104) at a second shaft end, wherein the housing includes a second bearing housing (136) that houses the second bearing assembly.

15. The fishing reel of claim 14, wherein an elastic member is positioned within the first bearing housing (132) for absorbing axial loads on the shaft by allowing axial movement of the first bearing assembly in the first bearing housing.

16. The fishing reel of claim 15, wherein the second bearing assembly (130) abuts an axial stop in the second bearing housing that limits axial movement of the second bearing assembly, and wherein the elastic member biases the first bearing assembly, the second bearing assembly, and the shaft towards the axial stop.

17. The fishing reel of claim 16, wherein the elastic member is a spring.

18. The fishing reel of any of claims 11 to 17, wherein the brake assembly (122) includes a brake plate (170) secured to the spool, wherein the brake pads (168) engage the brake plate to apply the friction brake force.

19. The fishing reel of any of claims 11 to 18, wherein each of the one or more brake pads (168) is axially moveable relative to the brake disk when the one or more brake pads contact the spool.

20. The fishing reel of claim 19, wherein each of the one or more brake pads (168) includes a head (174) that abuts the spool when the brake disk is in the second position, and a stem (176) extending from the head and being received by a corresponding bore (172) in the brake disk, and wherein an elastic member (178) is positioned in each bore and is compressed when the head of the corresponding brake pad abuts the spool to allow axial movement of the brake pads.
